# EUROPÄISCHE PATENTSCHRIFT

(11) **EP 3 277 461 B1**
(45) Veröffentlichungstag und Bekanntmachung des Hinweises auf die Patenterteilung: **23.10.2019**
(21) Anmeldenummer: 16707782.5
(22) Anmeldetag: 03.03.2016
(51) Int. Cl.: B24D 3/00, C04B 35/10, C04B 35/632, C04B 35/634, B24D 3/18, B24D 18/00, C04B 38/06

(54) **OFFENPORIGE, KERAMISCH GEBUNDENE SCHLEIFWERKZEUGE, VERFAHREN ZU IHRER HERSTELLUNG SOWIE PORENBILDNERMISCHUNG VERWENDET FÜR DIE HERSTELLUNG DES SCHLEIFWERKZEUGES**
OPEN PORE CERAMIC BONDED ABRASIVE TOOL, METHOD FOR FORMING THE ABRASIVE TOOL AND PORE FORMING COMPOSITION USED FOR FORMING THE ABRASIVE TOOL
OUTIL ABRASIF DE CÉRAMIQUE AGGLOMÉRÉ DE POROSITÉ OUVERTE, PROCÉDÉ DE FORMATION DE L'OUTIL ABRASIF ET COMPOSITION POROGÈNE UTILISEE POUR LA FORMATION DE L'OUTIL ABRASIF

(30) Priorität: 01.04.2015 CH 4632015
(43) Veröffentlichungstag der Anmeldung: 07.02.2018
(73) Patentinhaber: Reishauer AG, 8304 Wallisellen (CH)
(72) Erfinder: DIDAVIDE, Cristina, 6260 Reiden (CH); MÜLLER, Matthias, 5722 Gränichen (CH)
(74) Vertreter: Detken, Andreas
(86) Internationale Anmeldenummer: PCT/EP2016/054546
(87) Internationale Veröffentlichungsnummer: WO 2016/155971

(56) Entgegenhaltungen:
- EP-A1- 1 403 231
- EP-A1- 1 839 720
- WO-A1-02/07933
- WO-A2-2006/130759
- WO-A2-2011/056671
- DE-A1- 19 628 820
- DE-U1- 20 221 728
- DE-U1-202010 015 210
- US-A1- 2003 054 154
- US-A1- 2003 194 947
- US-A1- 2009 311 946
- US-A1- 2010 154 315
- US-A1- 2010 162 632

## Beschreibung

### TECHNISCHES GEBIET

Die vorliegende Erfindung betrifft ein Verfahren zur Herstellung offenporiger keramisch gebundener Schleifwerkzeuge sowie dafür geeignete Porenbildner (wie z. B. aus der WO 2006/130759 A2 bekannt), wobei als Porenbildner eine mindestens zwei Polymere umfassende Porenbildnermischung eingesetzt wird. Darüber hinaus betrifft die vorliegende Erfindung auch offenporige, keramisch gebundene nach dem erfindungsgemässen Verfahren herstellbare Schleifwerkzeuge gemäß dem Oberbegriff des Anspruchs 1 (z. B. aus der US 2003/194947 A1 bekannt).

### STAND DER TECHNIK

Keramisch gebundene Schleifwerkzeuge werden in der Technik insbesondere zur Oberflächenbearbeitung eingesetzt. Zur Herstellung der Schleifwerkzeuge werden Schleifkörner, beispielsweise solche auf Basis von Aluminiumoxid, Siliziumcarbid, Diamant oder CBN, mit einem Bindemittel und gegebenenfalls weiteren Additiven, wie z.B. Füllstoffen, schleifaktiven Substanzen, Porenbildnern oder temporären Klebstoffen, zu einer Mischung verarbeitet, die dann zu der gewünschten Form verpresst wird. Der dabei entstehende Grünkörper wird anschliessend getrocknet, gegebenenfalls bei geeigneten Temperaturen von den zugesetzten Porenbildnern befreit und anschliessend keramisch gebrannt.

Je nach Einsatzzweck weisen die Schleifwerkzeuge eine bestimmte Porosität auf, wobei die Poren einen effizienten Einsatz von Kühlschmierstoffen und die Aufnahme und Abfuhr von Schleifspänen ermöglichen sollen, so dass ein hoher Materialabtrag bei geringer thermischer Belastung des Werkstückes ermöglicht wird. Es ist üblich, der Mischung künstliche Porenbildner zuzusetzen, wobei es sich um Stoffe handelt, die aus dem Grünkörper bei niedrigen Temperaturen durch Verdampfen, Sublimieren oder Verbrennen entfernt werden können. Der bekannteste und immer noch am meisten eingesetzte Porenbildner für keramisch gebundene Schleifwerkzeuge ist Naphthalin, das bereits bei ca. 80 °C durch Sublimation entfernt werden kann. Ein Nachteil der Verwendung von Naphthalin ist insbesondere in der Toxizität und vor allem auch in dem intensiven und typischen Eigengeruch zu sehen, so dass nicht nur die Mitarbeiter in den Produktionsstätten, sondern auch die Anwohner durch die Abluft belästigt und gesundheitlich gefährdet werden. Trotz entsprechender aufwändiger und kostenintensiver Schutzmassnahmen lässt sich bei dem Einsatz von Naphthalin eine Belästigung und Gefährdung der Umwelt nicht vollständig vermeiden.

Es wurden daher in der Vergangenheit zahlreiche Versuche unternommen, Naphthalin durch alternative Porenbildner zu ersetzen, was jedoch häufig daran scheiterte, dass diese alternativen Stoffe nicht oder nur ungenügend die für die Herstellung von keramisch gebundenen Schleifwerkzeugen erforderlichen positiven Eigenschaften zeigen, wie z.B. geringe Rückfederung nach der Formgebung, gutes Mischverhalten, geringe Quellneigung im Zusammenhang mit den flüssigen Anfeuchtsystemen, stabile homogene Verteilung und geringe Separationsneigung in der Fertigmasse, wenig exothermes und möglichst rückstandsfreies Ausbrandverhalten.

In der EP 2 540 445 A1 wird ein Verfahren zur Herstellung eines Werkzeugs aus gebundenem Schleifmittel beschrieben, wobei als Porenbildner Dicarbonsäuren sowie Mischungen von Dicarbonsäuren und Hydraten der Dicarbonsäuren eingesetzt werden. Ein Nachteil dieses Verfahrens besteht darin, dass bei der Zersetzung der Dicarbonsäuren erhebliche Gasvolumina frei werden, die eine mechanische Schädigung des Grünkörpers bewirken können, was durch eine zeit- und kostenaufwändige Temperaturführung vermieden werden muss. Darüber hinaus müssen die Dicarbonsäuren zusätzlich mit relativ grossem Aufwand unter Zusatz von Bindemitteln granuliert werden, um problemlos in der Mischung für die Grünkörper eingesetzt werden zu können, was die Herstellung der Schleifwerkzeuge zusätzlich kompliziert und verteuert.

Die DE 196 28 820 A1 beschreibt ein Verfahren zur Herstellung poröser keramischer Erzeugnisse, wobei der keramischen Masse in festem Aggregatzustand vorliegende, in der Masse nicht lösliche oder quellbare, nicht deformierbare Acrylatgläser aus Polyacrylsäureester oder Polymethacrylsäureester, die in definierter Körnung klassierbar sind, als ausbrennbare Porenbildner zugesetzt werden. Ein Nachteil des in dem obigen Dokument beschriebenen Verfahrens besteht darin, dass die Verbrennungs- und Zersetzungsprodukte des Acrylatglases beim Ausbrennen in einem engen Temperaturintervall freigesetzt werden, wodurch die zur Reinigung der Abgase einzusetzende Nachverbrennungsanlagen kurzfristig äusserst stark belastet werden, was die Gefahr einer unvollständigen Verbrennung und damit einer Belastung der Umwelt mit sich bringt. Hinzu kommt, dass auch Polyacrylate nicht vollständig geruchsfrei verbrennen, was sich insbesondere dann negativ bemerkbar macht, wenn grössere Mengen schlagartig verbrannt werden. Darüber hinaus besteht die Gefahr, dass durch die beim Ausbrennen des Porenbildners kurzzeitig freigesetzten grossen Gasvolumina Kräfte generiert werden, wodurch die Schleifwerkzeuge geschädigt werden können.

Das deutsche Gebrauchsmuster DE 20 2010 015 210 U1 offenbart den Einsatz von Thermoplastgranulaten als neuartige Porenbildner. Der Schrift sind keinerlei Details zu entnehmen, welches thermoplastische Material eingesetzt werden soll und wie dieses thermoplastische Granulat eingesetzt werden soll.

### DARSTELLUNG DER ERFINDUNG

Es besteht somit weiterhin der Bedarf an einem Porenbildner und einem Verfahren zur Herstellung offenporiger Schleifwerkzeuge, das die Nachteile des Standes der Technik überwindet.

Gelöst wird die Aufgabe durch ein Verfahren zur Herstellung offenporiger, keramisch gebundener Schleifwerkzeuge, wobei eine Porenbildnermischung eingesetzt wird, die mindestens zwei unterschiedliche Brennkurven aufweisende Polymere umfasst. Die Maxima von mindestens zwei Brennkurven der unterschiedlichen Polymere unterscheiden sich um mindestens 20 °C, wobei die Maxima der Brennkurven sämtlicher Polymere der Mischung jeweils unter 750 °C liegen.

Unter dem Begriff der Brennkurve wird hier der Emissionsverlauf verstanden, der die veränderlichen Emissionskonzentrationen der Ausbrennstoffe über dem Zeit- und Temperaturverlauf des Ofenbrandes darstellt, z.B. über dem Zeitverlauf des Ofenbrandes bei linearem Temperaturanstieg.

Durch den Einsatz einer Mischung von mehreren Polymeren mit unterschiedlichen Brennkurven gelingt es, die Freisetzung der Porenbildner über ein grösseres Zeitintervall zu erstrecken, so dass die eingangs geschilderten Probleme der kurzfristigen Überlastung der Nachverbrennungsanlage und der Schädigung der Schleifwerkzeuge überwunden werden können.

Vorzugsweise werden Polymere eingesetzt, deren Verbrennungsprodukte bei einer vollständigen Verbrennung im Wesentlichen aus Kohlendioxid und Wasser bestehen, so dass auch die Probleme der Geruchsentwicklung und der Gesundheitsgefährdung gelöst werden können. Dabei wird vorausgesetzt, dass das bei der Verbrennung ebenfalls entstehende CO weiter zu CO₂ umgesetzt wird.

Eine besonders vorteilhafte Ausgestaltung der vorliegenden Erfindung sieht vor, dass eine Mischung aus drei Polymeren als Porenbildner eingesetzt wird, wodurch die Brennkurve der Mischung weiter optimiert und gestreckt werden kann, so dass die oben beschriebenen Probleme noch wirkungsvoller eliminiert werden können.

Vorzugsweise sind für die Porenbildnermischung Polymere aus der Gruppe der Thermoplaste vorgesehen, wobei jedoch auch Duroplaste als Porenbildner in Frage kommen, wenn sie sich in dem oben beschriebenen Temperaturbereich zersetzen und die Zersetzungsprodukte ausschliesslich unter Entwicklung von Kohlendioxid und Wasser unterhalb von 750 °C verbrannt werden können.

Die oben geforderten Eigenschaften können insbesondere dann realisiert werden, wenn unterschiedliche thermoplastische Polymere ausgewählt werden aus der Gruppe bestehend aus Polylactid (PLA), Polyacrylat (PMMA), Polyethylen (PE), Polypropylen (PP), Polyvinylacetat (PVA), Polyvinylbutyral (PVB) und Polyketon (PK), wobei eine besonders vorteilhafte Mischung weniger als 50 Vol.% Polyacrylat enthält.

Die Porenbildnermischung sollte jedoch nicht nur eine Brennkurve aufweisen, die sich über ein relativ breites Temperaturintervall erstreckt, sondern auch die sonstigen, für einen Porenbildner für keramisch gebundene Schleifwerkzeuge geforderten positiven Eigenschaften aufweisen, wie z.B. gutes Mischverhalten und geringe Quellneigung, homogene stabile Verteilung und geringes Separieren in der Fertigmasse, geringe Rückfederung beim Pressen der Masse sowie geringe Belastung der Umwelt und des Arbeitsplatzes.

So wurde gefunden, dass bei einer bevorzugten Ausführungsform der vorliegenden Erfindung mindestens eines der thermoplastischen Polymere kristalline Bereiche aufweist, wodurch die Pressbarkeit der Masse verbessert wird.

Es wurde eine besonders vorteilhafte Ausgestaltung der vorliegenden Erfindung mit einer Mischung von thermoplastischen Polymeren als Porenbildner gefunden, wobei die Porenbildnermischung 20 bis 80 Vol.% Polyethylen, 10 bis 50 Vol.% Polyacrylat und 10 bis 50 Vol.% entweder Polylactid, Polyvinylacetat oder Polyvinylbutyral umfasst und bevorzugt nur aus diesen Bestandteilen besteht.

Im Rahmen der Untersuchungen von unterschiedlichen Polymermischungen wurde darüber hinaus gefunden, dass die Brennkurven der Mischungen ein von den Brennkurven der einzelnen Polymere unterschiedliches Profil aufweisen, das sich nicht durch eine einfache Überlagerung der Brennkurven der einzelnen Polymere ergibt.

Ein erfindungsgemässes Herstellverfahren zur Herstellung offenporiger, keramisch gebundener Schleifwerkzeuge umfasst:
- Mischen von Schleifkörnern mit einem keramischen Binder, einer Porenbildnermischung der vorstehend genannten Art und Hilfsstoffen (z.B. Klebstoff und weiteren Additiven), um eine Mischung zu erhalten;
- Pressen eines Grünlings aus der Mischung; und
- Brennen des Grünlings, um ein keramisch gebundenes Schleifwerkzeug zu erhalten.

Das Mischen kann insbesondere dadurch erfolgen, dass die für den Schleifprozess einzusetzenden Schleifkörner vorgelegt (vorzugsweise in einer definierten Korngrösse) und zunächst mit einem pulvrigen Binder vermischt werden. Der Mischung wird dann ein flüssiger temporärer Klebstoff zugegeben, mit dessen Hilfe der keramische Binder, der als Pulver zugegeben wird, auf der Schleifkomoberfläche fixiert wird. Als temporärer Klebstoff kann beispielsweise Dextrin eingesetzt werden. Anschliessend werden die Porenbildner und sonstigen Additive zugegeben, wobei die Porenbildner ebenso wie die Schleifkörner in fester Form in einer definierten Korngrösse eingesetzt werden, die der Grösse der gewünschten Poren entspricht und vorzugsweise annähernd im Korngrössenbereich der eingesetzten Schleifkörner liegt.

Auch die Form der erfindungsgemäss eingesetzten Polymerpartikel ist vorteilhaft der Form der Schleifkörner angepasst. Vorzugsweise werden die Polymerpartikel als kubische oder kugelförmige Partikel eingesetzt. Als sonstige Additive werden insbesondere Füllstoffe, Schleifhilfsmittel, Anfeuchtmittel und Tenside eingesetzt, die unter anderem dazu dienen, die Rheologie der Masse so einzustellen, dass das Pressen zu einem homogenen Grünkörper ermöglicht bzw. erleichtert wird.

Weitere vorteilhafte Ausführungsformen des erfindungsgemässen Verfahrens bestehen darin, die Porenbildnermischung vor dem Einbringen in die Masse mit einem temporären Klebstoff zu vermischen, womit ebenfalls die Homogenität des Schleifwerkzeugs verbessert werden kann, wobei es ganz allgemein günstig ist, wenn die Brenntemperatur des Klebstoffes höher ist als die der Porenbildner, so dass der Klebstoff erst nach dem Entfernen der Porenbildner verbrannt wird.

Im Rahmen der Entwicklungsarbeiten für den neuartigen Porenbildner wurde gefunden, dass beim Einsatz einer Mischung von thermoplastischen Polymeren als Porenbildner Schleifwerkzeuge mit einer verbesserten Homogenität und einer höheren Schleifleistung erhalten werden können. Aufgrund der verbesserten Homogenität der Schleifwerkzeuge ist es möglich, Schleifscheiben mit grösseren Volumina zu produzieren, wodurch die Produktivität zusätzlich verbessert wird.

Eine besonders vorteilhafte Ausgestaltung der vorliegenden Erfindung sieht vor, dass die Polymermischung in einer definierten, multimodalen Korngrössenverteilung eingesetzt wird, so dass gezielt ein definierter Porenraum mit unterschiedlichen Porengrössen im Schleifwerkzeug erhalten werden kann, der für die jeweilige Schleifoperation optimiert ist, wobei die Grösse der Poren den bei dem Schleifprozess entstehenden Spänen und dem Kühlmittelbedarf angepasst ist. Dabei werden die unterschiedlichen Polymere bevorzugt jeweils als Granulate mit einer engen Kornfraktion in einem Korngrössenbereich zwischen 0.05 und 2 mm eingesetzt.

Die Korngrössen werden gemäss ISO 8486 durch eine Siebanalyse anhand der lichten Maschenweite der Siebe (FEPA-Norm geht von der Anzahl der Maschen pro Inch aus) gewonnen. Die Korngrösse ist also definiert nach dem lichten Mass des Maschenquadrates des Siebes. Damit wird faktisch das Korn als kugelförmig angenommen und somit ist der maximale angenommene Durchmesser des Korns kleiner als die lichte Maschenweite des Siebes. Da Siebprozesse durch ein Nacheinander-Passieren des Siebgutes über mehrere Siebe mit gestuft kleiner werdender Maschenweite ablaufen, passieren alle Körner mit einem scheinbaren Durchmesser kleiner als die lichte Maschenweite des jeweiligen Siebes das betrachtete Sieb und bleiben auf dem nachgeschalteten Sieb mit nächst feinerer Maschenweite liegen, sofern der Korndurchmesser dann grösser ist als die lichte Maschenweite dieses Folgesiebes. D.h. eine Siebfraktion weist Komgrössenbereiche auf, die grösser als die lichte Maschenweite des Folgesiebes und kleiner als die lichte Maschenweite des betrachteten Siebes sind (Beispiel: 125 ... 180 mm). Eine Korngrösse enthält nach ISO 8486 Fraktionen von mehreren Sieben.

Die Korngrössenverteilung weist eine Verteilungsfunktion (z.B. Gauss-Verteilung) auf. Der Mittelwert der Korngrössenverteilung, für den die Bedingung gilt, dass 50% der Körner grösser als der Mittelwert und folglich 50% der Körner kleiner als der Mittelwert sind, heisst d50-Wert.

Diese Definitionen gelten gleichermassen für die Grösse der Porenbildnerkörner als auch für die Grösse der Schleifkörner.

Vorzugsweise weist die Porenbildnermischung eine multimodale Korngrössenverteilung mit mindestens zwei Korngrössenmaxima im Bereich zwischen 100 und 1000 µm auf.

Beim Einsatz einer Porenbildnermischung mit einer bimodalen Korngrössenverteilung liegt die mittlere Korngrösse d50 der Feinfraktion vorzugsweise zwischen 100 und 400 µm und die mittlere Korngrösse d50 der Grobfraktion zwischen 350 und 1000 µm.

Für eine Porenbildnermischung mit einer trimodalen Korngrössenverteilung liegt die mittlere Korngrösse d50 der Feinfraktion vorteilhaft zwischen 100 und 300 µm, die mittlere Korngrösse d50 der mittleren Fraktion zwischen 250 und 450 µm und die mittlere Korngrösse d50 der Grobfraktion zwischen 400 und 1000 µm.

Eine multimodale Korngrössenverteilung enthält dabei unterschiedliche Korngrössen, die sich von der Korngrösse her deutlich unterscheiden, so sich die Maxima der Verteilungskurven (z.B. Gauss-Verteilungskurven) separat ausbilden können.

Allgemein kann festgehalten werden, dass die mittleren Korngrössen d50 der einzelnen Porenbildnerfraktionen vorzugsweise um mindestens 100 µm auseinander liegen.

Beim Einsatz von Porenbildnermischungen mit einer multimodalen Verteilung der Porenbildner resultieren Schleifscheiben, die ebenfalls eine multimodale Porengrössenverteilung aufweisen, wobei die Poren einen mittleren Durchmesser zwischen 50 und 2000 µm aufweisen. Es wurde gefunden, dass offenporige, keramisch gebundene Schleifwerkzeuge mit einer gezielten multimodalen Porengrössenverteilung Vorteile gegenüber den konventionellen Schleifwerkzeugen haben, da es auf diese Weise möglich ist, das Schleifwerkzeug optimal den Schleifbedingungen anzupassen. Die Vorteile spiegeln sich insbesondere wider in hohen Abtragsleistungen bei gleichzeitig kühlem Schliff.

Die erfindungsgemässen offenporigen, keramisch gebundenen Schleifwerkzeuge besitzen einen Porenanteil zwischen 20 und 80 Vol.% und weisen vorzugsweise eine multimodale Porengrössenverteilung mit mindestens zwei Porengrössenmaxima im Bereich zwischen 100 und 1000 µm auf.

Die Definition der Porengrösse bzw. der Porengrössenverteilung entspricht der oben angegebenen Definition einer Korngrösse bzw. der Korngrössenverteilung, wenn die Poren als negative Abbilder von Körnern verstanden werden. Eine multimodale Porengrössenverteilung enthält dementsprechend unterschiedliche Porengrössen, die sich von der Porengrösse her deutlich unterscheiden, so sich die Maxima der Verteilungskurven (z.B. Gauss-Verteilungskurven) separat ausbilden können.

Die Porengrössenverteilung der Poren, die mit einer Porenbildnermischung gegebener Korngrössenverteilung erzeugt werden, hängt eng mit der Korngrössenverteilung der Porenbildner zusammen. Dementsprechend hängt auch der Mittelwert der Porengrössenverteilung dem Mittelwert der Korngrössenverteilung eng zusammen.

Der Porenanteil ist das Verhältnis des Porenvolumens, das sich in seiner Gesamtheit aus dem natürlichen Porenraum infolge der Zwischenräume zwischen den Schleifkörnern infolge der natürlichen Kornschüttung und dem künstlichen Porenraum, der durch Porenbildner erzeugt wird, zusammensetzt, zum Gesamtvolumen des Schleifwerkzeugs.

Die Porengrössenverteilung und der Porenanteil können durch mikroskopische Analyse von Schnitten des Schleifwerkzeugs mittels geeigneter Software bestimmt werden.

Bei einer vorteilhaften Ausgestaltung der vorliegenden Erfindung besitzt das Schleifwerkzeug eine bimodale Porenverteilung, wobei das Maximum der feinen Poren zwischen 100 und 400 µm und das Maximum der groben Poren zwischen 350 und 1000 mm liegt.

Eine weitere vorteilhafte Ausführungsform sieht Schleifwerkzeuge mit einer trimodalen Porenverteilung vor, wobei das Maximum der feinen Poren zwischen 100 und 300 µm, das Maximum der mittleren Poren zwischen 250 und 450 µm und das Maximum der groben Poren zwischen 400 und 1000 µm liegt.

Vorzugsweise liegen die Maxima der Porengrössenverteilung um mindestens 100 µm auseinander.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein beispielhaftes keramisch gebundenes Schleifwerkzeug;
- Fig. 2: einen stark schematischen Ablaufplan eines Verfahrens zur Herstellung eines offenporigen, keramisch gebundenen Schleifwerkzeugs;
- Fig. 3: eine stark schematisierte Skizze des Gefüges eines offenporigen, keramisch gebundenen Schleifwerkzeugs; und
- Fig. 4: eine trimodale Porengrössenverteilung.

### BESCHREIBUNG BEVORZUGTER AUSFÜHRUNGSFORMEN

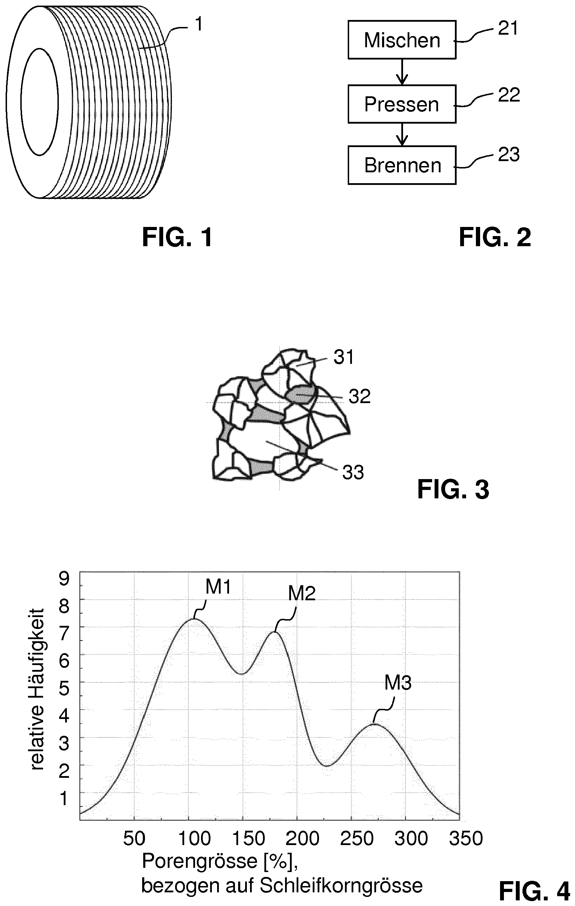

Die Fig. 1 zeigt beispielhaft ein keramisch gebundenes Schleifwerkzeug in Form einer Schleifschnecke zur Hartfeinbearbeitung von Verzahnungen. Die Erfindung ist jedoch nicht auf derartige Schleifschnecken begrenzt, sondern ist auf beliebige Arten von keramisch gebundenen Schleifwerkzeugen anwendbar.

In Fig. 2 ist ein vereinfachter Ablaufplan für die Herstellung eines keramisch gebundenen Schleifwerkzeugs illustriert. Zunächst werden Schleifkörner, ein keramischer Binder, eine Porenbildnermischung und gegebenenfalls Kleber und Additive gemischt (Schritt 21). Anschliessend wird die so entstandene Masse aus dem Mischer entfernt, gesiebt, in eine Form gegeben und mit einer hydraulischen Presse gepresst (Schritt 22). Der so erhaltene Grünkörper wird in einem Ofen gebrannt (Schritt 23).

Das Gefüge eines so gefertigten Schleifwerkzeugs ist in der Fig. 3 in stark schematischer Form illustriert. Die Schleifkörner 31 sind mit Bindungsbrücken 32, bestehend aus dem keramischen Bindemittel, verbunden. Dazwischen befindet sich eine Vielzahl von unterschiedlich grossen Poren 33. Das Gemisch aus Schleifkörnern 31, Bindungsbrücken 32 und Poren 33 bildet ein dreidimensionales offenes Netzwerk (in der Schnittdarstellung der Fig. 3 nicht erkennbar). Die Form, Grösse und Grössenverteilung der Poren hängt stark von der gewählten Porenbildnermischung ab.

Die künstlich mit Porenbildnern erzeugten Poren besitzen eine unregelmässige Form, die sich aus der Geometrie der Porenbildner sowie der angrenzenden Schleifkörner ableitet, die jedoch näherungsweise als kugelförmig beschrieben werden kann. Ihre Grösse kann daher durch ihren mittleren Durchmesser charakterisiert werden. Grössenangaben für Poren beziehen sich im Folgenden immer auf den elektronenmikroskopisch ermittelten mittleren Durchmesser. Die Schleifkörner haben ebenfalls eine beliebige, meist unregelmässig-polyedrische Form, die aber üblicherweise ebenso durch die kugelförmige Beschreibung angenähert wird. Die Schleifkorngrösse kann in üblicher Weise durch den Schleifkorndurchmesser beschrieben werden, der im Falle von Siebkörnungen kleiner als die lichte Maschenweite des Siebes sein muss. Grössenangaben für Schleifkörner beziehen sich im Folgenden immer auf die durch Siebung ermittelte Schleifkorngrösse. Ebenso beziehen sich Grössenangaben bzw. Grössenverteilungen für Porenbildner immer auf die durch Siebung ermittelten Grössen.

### Eingesetzte Porenbildner

In der Tabelle 1 sind einige Porenbildner zusammengefasst, die im Rahmen der vorliegenden Arbeiten eingesetzt wurden. Die gewählte Korngrössenverteilung des Porenbildners ist auf den mittleren Durchmesser des Schleifkorns DK bezogen und lässt sich daraus mit einem für den jeweiligen Porenbildner typischen Faktor Fx berechnen. Wenn z.B. der Schleifkorndurchmesser D_{K} = 200 µm und der Faktor Fₓ = 2.0 ± 1.0 beträgt, dann beträgt nach dieser Definition die Korngrössenverteilung des Porenbildners Fₓ^{∗}D_{K} = (400 ± 200) µm. Dabei bezeichnet die Zahl hinter dem Zeichen "±" die doppelte Standardabweichung der Korngrössenverteilung bezogen auf die Masse, d.h. 95 Massenprozent des betreffenden Porenbildners haben eine Korngrösse innerhalb des angegebenen Intervalls. Die Korngrössenverteilung jedes einzelnen Porenbildners war monomodal und annähernd gaussförmig, mit einem ausgeprägten Maximum an der angegebenen Stelle.

**Tabelle 1**

| **Porenbildner** | **Korngrösse Fx^{∗}DK** | **Brennkurvenmaximum (°C)** | **Fx** |
|---|---|---|---|
| Polyethylen | F1^{∗}DK | 120-340 | 2.0 ± 1.0 |
| Polyacrylat | F2^{∗}DK | 230-250 | 1.5 ± 0.5 |
| Polylactid | F3^{∗}DK | 180 | 2.0 ± 1.0 |
| Polyvinylbutyral | F4^{∗}DK | 195 | 1.0 ± 0.5 |

Zur Bildung der Porenbildnermischungen A, B und C wurden die in der obigen Tabelle 1 aufgeführten Feststoffe in einem Mischer jeweils in den in der Tabelle 2 angegeben Verhältnissen gründlich miteinander vermischt. Zum Vergleich mit dem Stand der Technik wurde in Beispiel D 100% Naphthalin als Porenbildner eingesetzt.

**Tabelle 2**

| **Porenbildner** | **Mischung (Gew.%)** | | | |
|---|---|---|---|---|
| | **A** | **B** | **C** | **D** |
| Polyethylen | 40 | 31 | 33 | - |
| Polyacrylat | 41 | 33 | 37 | - |
| Polylactid | 19 | 23 | 19 | - |
| Polyvinylbutyral | - | 13 | 11 | - |
| Naphthalin | - | - | - | 100 |

### Herstellung der Schleifscheiben

Für sämtliche getesteten Scheiben wurden die gleichen, in der Tabelle 3 wiedergegebenen Rohmaterialbestandteile eingesetzt, so dass durch den Schleiftest ein direkter Vergleich der einzelnen Porenbildnermischungen möglich ist, wobei die Mengen der einzelnen Komponenten jeweils auf die Schleifkornmenge (100%) bezogen sind.

**Tabelle 3**

| **Rohmaterial** | **Charakterisierung** | **Menge (Gew.%)** |
|---|---|---|
| Schleifkorn | Korund (D_{K} = 190 µm) | 100 |
| Kleber | Polymer-Lösung | 2.05 |
| Zusatzstoffe | Diverse Additive | 2.79 |
| Porenbildner | A, B, C oder D | 5.07 |

Die Komponenten wurden in einen Trommelmischer eingebracht und in 23 Mischschritten ca. 60 Minuten gemischt, bis optisch eine gewisse Homogenität und Rieselfähigkeit der Masse zu erkennen war. Anschliessend wurde die Masse aus dem Mischer entfernt und gesiebt. Die gesiebte Masse wurde in eine Form gegeben und mit einer hydraulischen Presse bei Drücken von 30 bar formschlüssig gepresst. Die so erhaltenen Grünkörper hatten die Abmessungen (Durchmesser x Bohrung x Höhe) 280 x 128 x 157 mm und wurden in einem elektrischen Ofen bis zu einer Maximaltemperatur von 1150 °C mit einem Brennprogramm gebrannt, das so ausgewählt war, dass sich die Abgasmengen über einen Zeitraum von 50 Stunden relativ gleichmässig verteilen, wobei Abgasmaxima nach ca. 8 Stunden, ca. 22 Stunden, ca. 35 Stunden, ca. 45 Stunden und ca. 50 Stunden mit Hilfe eines Flammenionisationsdetektors gemessen wurden.

Bei der Verarbeitung der Massen bis zum Brennen der Scheiben wurde bei den Mustern A, B und C keine Geruchsentwicklung festgestellt, während das Muster D schon beim Mischen und Pressen den für das Naphthalin charakteristischen extrem starken und unangenehmen Geruch nach Mottenpulver und Teer zeigte. Bei der Temperaturbehandlung, bei der zunächst der Porenbildner verbrannt wird, war bei den Mustern A - C ein leichter, jedoch nicht unangenehmer wachsähnlicher Geruch festzustellen. Das Brennen der Musterscheibe D war wieder von einer extrem starken Geruchsbelästigung begleitet.

### Schleiftests

Die fertigen Schleifscheiben hatten die in der folgenden Tabelle 4 beschriebenen Eigenschaften. Zum Test der Scheiben wurde in einem ersten Schritt das Grenzzeitspanungsvolumen bzw. die äquivalente Grenzspandicke h_{eq_th} bis zum Auftreten von Schleifbrand und in einem zweiten Schritt das Grenzzeitspanungsvolumen bzw. die äquivalente Grenzspandicke h_{eq_v} bezüglich des Überschreitens des zulässigen Verschleisslimits bestimmt. Beide Werte sind als relative Werte, bezogen auf eine Vergleichsscheibe, ebenfalls in der Tabelle 4 festgehalten.

**Tabelle 4**

| **Probenkörper** | **A** | **B** | **C** | **D** |
|---|---|---|---|---|
| Abmessungen (mm) | 275x125x160 | 275x125x160 | 275x125x160 | 275x125x160 |
| Gewicht (g) | 9440 | 9150 | 9215 | 9308 |
| Dichte (g/cm3) | 1.875 | 1.860 | 1.871 | 1.891 |
| Schleifbrandgrenze (%)* | 115 | 109 | 104 | 97 |
| Verschleissgrenze (%)** | 112 | 108 | 98 | 101 |

| | | | | |
|---|---|---|---|---|
| * Schleifbrandgrenze = maximal erreichbare äquivalente Spanungsdicke h_{eq}_ₜₕ, die schleifbrandfrei, d.h. ohne thermomechanische Randschichtschädigung anwendbar ist. ** Verschleissgrenze = maximal erreichbare äquivalente Spanungsdicke h_{eq}_ᵥ, die bei Erhaltung eines vorgegebenen Verschleisskriteriums anwendbar ist. | | | | |

Die Scheiben wurden auf einer Reishauer Maschine RZ 260 unter Einsatz von Kühlöl und einem Diamantabrichtwerkzeug getestet. Als Werkstück wurde ein Prüfrad aus dem Werkstoff 16MnCr5 ausgewählt. Es wurde parallel eine Vergleichsscheibe als Bezugsgrösse (100%) mituntersucht, um mögliche Einflüsse der Werkstückcharge auszuschliessen.

Beim Schleifbrandtest wurde durch systematische Vergrösserung des Axialvorschubes (Z-Vorschub) bei ansonsten gleichen Schnittwerten und Schnittbedingungen in drei Stufen mit drei Egalisierhüben, einem Schrupphub und einem Schlichthub gearbeitet. Auf diese Weise konnte in der 2. Stufe für den Schrupphub eine einheitliche Zustellung sichergestellt werden. Der Schleifbrandnachweis erfolgte nach dem Schlichthub (3. Stufe) mittels Nitalätzung.

Der Verschleisstest wurde mit einer vergleichbaren Technologie durchgeführt, wobei in der 2. Stufe beim Schrupphub mit variablem Z-Vorschub gearbeitet und nach dem Schlichthub (3. Stufe) der Verschleiss im Nutzungsbereich der Schleifschnecke während des Schrupphubes bestimmt wurde. Bei einer Überschreitung einer Formabweichung des Profils f_{ff} > 6 µm bei vorgegebener Schleifgeschwindigkeit wird die Leistungsgrenze erreicht.

Durch eine hohe Verschleissfestigkeit wird die Abrichthäufigkeit reduziert und die Anzahl der in einem Abrichtzyklus schleifbaren Werkstücke erhöht und somit die Produktivität gesteigert.

Die bei der Verarbeitung der Massen A, B und C vorgefundenen Bedingungen in Bezug auf die Geruchsentwicklung sowie die mechanische, physikalische und chemische Verarbeitbarkeit machen deutlich, dass die eingesetzten Polymermischungen hervorragend als Porenbildner geeignet sind. Alle drei erfindungsgemässen Muster zeigen eine geringe Rückfederung nach der Formgebung, ein gutes Mischverhalten, keine Quellneigung im Zusammenhang mit den flüssigen Anfeuchtsystemen und eine geringe Separationsneigung in der Fertigmasse. Besonders positiv ist das wenig exotherme und über einen breiten Temperaturbereich verteilte Ausbrandverhalten, so dass beim Brennen keine Schädigungen der Scheiben zu verzeichnen waren.

Aufgrund des gezielten Einsatzes der unterschiedlichen Polymere mit unterschiedlichen Korngrössen können Schleifwerkzeuge mit einer homogenen multimodalen Porenverteilung erhalten werden, die sowohl für die Aufnahme der Späne als auch für die Spülung mit dem Kühlmittel optimiert ist. Gleichzeitig kann auf diese Weise die Härte der Scheibe optimiert werden. Die positive Auswirkung auf das Schleifverhalten zeigt sich sowohl beim Schleifbrandtest als auch beim Verschleisstest, bei denen die erfindungsgemässen Schleifscheiben bis zu 15% besser abschneiden als der Standard oder die konventionelle mit Naphthalin gefertigte Scheibe.

Eine typische multimodale Porengrössenverteilung ist in der Fig. 4 für das Beispiel A wiedergegeben. Zur Bestimmung der Porengrössenverteilung wurden Stücke der Oberfläche einer Schleifscheibe in Epoxidharz eingebettet, poliert und mit Hilfe eines Rasterelektronenmikroskops analysiert, wobei die Software "Imagic" für die Bildanalyse eingesetzt wurde. Bei der Bestimmung wurden nur Poren mit maximal 10% Abweichung von der Kreisform (Verhältnis von maximalem Durchmesser zu minimalem Durchmesser) berücksichtigt. Die Interpolation der Messwerte ergab eine trimodale Verteilung mit einem Maximum M1 bei einer Bezugsporengrösse relativ zur mittleren Schleifkorngrösse von ca. 100 % mit Anteilen an künstlichen und natürlichen Poren und zwei weiteren Maxima M2 und M3 bei ca. 175 % und 225 %, die ausschliesslich von künstlichen Poren herrühren. Zur Porengrössenbestimmung selber wurde der mittlere Porendurchmesser herangezogen.

## Patentansprüche

1. Offenporiges, keramisch gebundenes Schleifwerkzeug (1) mit einem Porenanteil zwischen 20 und 80 Vol.%, wobei das Schleifwerkzeug (1) eine multimodale Porengrössenverteilung mit mindestens zwei Porengrössenmaxima (M1, M2, M3) aufweist, **dadurch gekennzeichnet, dass** die Poren (33) einen mittleren Durchmesser zwischen 50 und 2000 µm aufweisen und die Porengrössenmaxima (M1, M2, M3) der Porengrössenverteilung um mindestens 100 µm auseinander liegen.

2. Schleifwerkzeug (1) nach Anspruch 1, **dadurch gekennzeichnet, dass** mindestens zwei der Porengrössenmaxima im Bereich zwischen 100 und 1000 µm liegen.

3. Schleifwerkzeug (1) nach Anspruch 1 oder 2, **dadurch gekennzeichnet,**
**dass** das Schleifwerkzeug (1) eine bimodale Porengrössenverteilung mit feinen Poren und groben Poren aufweist, wobei die feinen Poren ein Porengrössenmaximum zwischen 100 und 400 µm und die groben Poren ein Porengrössenmaximum zwischen 350 und 1000 µm bilden, oder
**dass** das Schleifwerkzeug eine trimodale Porengrössenverteilung mit feinen Poren, mittleren Poren und groben Poren aufweist, wobei die feinen Poren ein Porengrössenmaximum zwischen 100 und 300 µm, die mittleren Poren ein Porengrössenmaximum zwischen 250 und 450 µm und die groben Poren ein Porengrössenmaximum zwischen 400 und 1000 µm bilden.

4. Porenbildnermischung für die Herstellung offenporiger, keramisch gebundener Schleifwerkzeuge (1), wobei die Porenbildnermischung mindestens zwei unterschiedliche porenbildende Polymere umfasst, **dadurch gekennzeichnet, dass** die mindestens zwei unterschiedlichen porenbildenden Polymere unterschiedliche Brennkurven aufweisen, wobei jede der Brennkurven ein Maximum aufweist, wobei sich die Maxima der Brennkurven von mindestens zwei der porenbildenden Polymere um mindestens 20 °C unterscheiden, und wobei die Maxima der Brennkurven sämtlicher porenbildender Polymere unter 750 °C liegen.

5. Porenbildnermischung nach Anspruch 4, **dadurch gekennzeichnet, dass** die Verbrennungsprodukte der porenbildenden Polymere ausschliesslich Kohlendioxid und Wasser umfassen.

6. Porenbildnermischung nach Anspruch 4 oder 5, **dadurch gekennzeichnet, dass** die porenbildenden Polymere ausgewählt sind aus der Gruppe der Thermoplaste und Duroplaste.

7. Porenbildnermischung nach Anspruch 6, **dadurch gekennzeichnet, dass** die porenbildenden Polymere Thermoplaste sind, ausgewählt aus der Gruppe bestehend aus Polylactat (PLA), Polyacrylat (PMMA), Polyethylen (PE), Polypropylen (PP), Polyketon (PK), Polyvinylacetat (PVA) und Polyvinylbutyral (PVB).

8. Porenbildnermischung nach einem der Ansprüche 4 bis 7, **dadurch gekennzeichnet, dass** die Porenbildnermischung 20 bis 80 Vol.% Polyethylen, 10 bis 50 Vol.% Polyacrylat und 10 bis 50 Vol.% Polylactat, Polyvinylacetat oder Polyvinylbutyral umfasst.

9. Porenbildnermischung nach einem der Ansprüche 4 bis 8, **dadurch gekennzeichnet, dass** die einzelnen porenbildenden Polymere jeweils als Porenbildnerfraktion in einem Korngrössenbereich zwischen 0.05 und 2 mm vorliegen, wobei die Porenbildnermischung eine multimodale Korngrössenverteilung aufweist.

10. Porenbildnermischung nach Anspruch 9, **dadurch gekennzeichnet, dass** die multimodale Korngrössenverteilung mindestens zwei Korngrössenmaxima im Bereich zwischen 100 und 1000 µm aufweist.

11. Porenbildnermischung nach Anspruch 9 oder 10, **dadurch gekennzeichnet,**
**dass** die Porenbildnermischung eine bimodale Korngrössenverteilung mit einer Feinfraktion und einer Grobfraktion aufweist, wobei die Feinfraktion eine mittlere Korngrösse d50 zwischen 100 und 400 µm und die Grobfraktion eine mittlere Korngrösse d50 zwischen 350 und 1000 µm aufweist, oder
**dass** die Porenbildnermischung eine trimodale Korngrössenverteilung mit einer Feinfraktion, einer mittleren Fraktion und einer Grobfraktion aufweist, wobei die Feinfraktion eine mittlere Korngrösse d50 zwischen 100 und 300 µm, die die mittlere Fraktion eine mittlere Korngrösse d50 zwischen 250 und 450 µm und die Grobfraktion eine mittlere Korngrösse d50 zwischen 400 und 1000 µm aufweist.

12. Porenbildnermischung nach einem der Ansprüche 9 bis 11, **dadurch gekennzeichnet, dass** die Porenbildnerfraktionen unterschiedliche mittlere Korngrössen d50 aufweisen, wobei die mittleren Korngrössen d50 der einzelnen Porenbildnerfraktionen um mindestens 100 µm auseinander liegen.

13. Verfahren zur Herstellung offenporiger, keramisch gebundener Schleifwerkzeuge (1), wobei eine mindestens zwei porenbildende Polymere umfassende Porenbildnermischung eingesetzt wird, **dadurch gekennzeichnet, dass** die mindestens zwei unterschiedlichen porenbildenden Polymere unterschiedliche Brennkurven aufweisen, wobei jede der Brennkurven ein Maximum aufweist, wobei die Maxima der Brennkurven von mindestens zwei der porenbildenden Polymere sich um mindestens 20 °C unterscheiden und die Maxima der Brennkurven sämtlicher porenbildender Polymere der Porenbildnermischung unter 750 °C liegen.

14. Verfahren nach Anspruch 13, **dadurch gekennzeichnet, dass** die Porenbildnermischung in Kombination mit mindestens einem Klebstoff zur Pressmasse gegeben wird.

15. Verfahren nach Anspruch 14, **dadurch gekennzeichnet, dass** der Klebstoff eine Brenntemperatur aufweist, die höher ist als die Maxima der Brennkurven der porenbildenden Polymere.

## Claims

1. An open-pore, ceramic-bonded grinding tool (1) having a pore fraction of between 20 and 80 vol%, the grinding tool (1) having a multimodal pore size distribution having at least two pore size maxima (M1, M2, M3), **characterised in that** the pores (33) have an average diameter of between 50 and 2000 µm and the pore size maxima (M1, M2, M3) of the pore size distribution are at least 100 µm apart.

2. The grinding tool (1) as claimed in claim 1, **characterised in that** at least two of the pore size maxima are in the range between 100 and 1000 µm.

3. The grinding tool (1) as claimed in claim 1 or 2, **characterised in**
**that** the grinding tool (1) has a bimodal pore size distribution with fine pores and coarse pores, the fine pores forming a pore size maximum of between 100 and 400 µm, and the coarse pores forming a pore size maximum of between 350 and 1000 µm, or in
**that** the grinding tool has a trimodal pore size distribution with fine pores, medium pores and coarse pores, the fine pores forming a pore size maximum of between 100 and 300 µm, the medium pores forming a pore size maximum of between 250 and 450 µm, and the coarse pores forming a pore size maximum of between 400 and 1000 µm.

4. A pore former mixture for producing open-pore, ceramic-bonded grinding tools (1), the pore former mixture comprising at least two different pore-forming polymers, **characterised in that** the at least two different pore-forming polymers have different firing curves, each of the firing curves having a maximum, the maxima of the firing curves of at least two of the pore-forming polymers differing by at least 20 °C, and the maxima of the firing curves of all the pore-forming polymers being below 750 °C.

5. The pore former mixture as claimed in claim 4, **characterised in that** the combustion products of the pore-forming polymers comprise exclusively carbon dioxide and water.

6. The pore former mixture as claimed in claim 4 or 5, **characterised in that** the pore-forming polymers are selected from the group of thermoplastics and thermosets.

7. The pore former mixture as claimed in claim 6, **characterised in that** the pore-forming polymers are thermoplastics selected from the group consisting of polylactate (PLA), polyacrylate (PMMA), polyethylene (PE), polypropylene (PP), polyketone (PK), polyvinyl acetate (PVA), and polyvinyl butyral (PVB).

8. The pore former mixture as claimed in any one of claims 4 to 7, **characterised in that** the pore former mixture comprises 20 to 80 vol% of polyethylene, 10 to 50 vol% of polyacrylate, and 10 to 50 vol% of polylactate, polyvinyl acetate or polyvinyl butyral.

9. The pore former mixture as claimed in any one of claims 4 to 8, **characterised in that** the individual pore-forming polymers are each present as a pore former fraction in a grain size range of between 0.05 and 2 mm, the pore former mixture having a multimodal grain size distribution.

10. The pore former mixture as claimed in claim 9, **characterised in that** the multimodal grain size distribution has at least two grain size maxima in the range between 100 and 1000 µm.

11. The pore former mixture as claimed in claim 9 or 10, **characterised in**
**that** the pore former mixture has a bimodal grain size distribution with a fine fraction and a coarse fraction, the fine fraction having an average grain size d50 of between 100 and 400 µm, and the coarse fraction having an average grain size d50 of between 350 and 1000 µm, or in
**that** the pore former mixture has a trimodal grain size distribution with a fine fraction, a medium fraction and a coarse fraction, the fine fraction having an average grain size d50 of between 100 and 300 µm, the medium fraction having an average grain size d50 of between 250 and 450 µm, and the coarse fraction having an average grain size d50 of between 400 and 1000 µm.

12. The pore former mixture as claimed in any one of claims 9 to 11, **characterised in that** the pore former fractions have different average grain sizes d50, the average grain sizes d50 of the individual pore former fractions being at least 100 µm apart.

13. A method for producing open-pore, ceramic-bonded grinding tools (1), using a pore former mixture comprising at least two pore-forming polymers, **characterised in that** the at least two different pore-forming polymers have different firing curves, each of the firing curves having a maximum, the maxima of the firing curves of at least two of the pore-forming polymers differing by at least 20°C, and the maxima of the firing curves of all the pore-forming polymers of the pore former mixture being below 750°C.

14. The method as claimed in claim 13, **characterised in that** the pore former mixture is added in combination with at least one adhesive to the press compound.

15. The method as claimed in claim 14, **characterised in that** the adhesive has a firing temperature which is higher than the maxima of the firing curves of the pore-forming polymers.

## Revendications

1. Un outil de ponçage à pores ouverts et liant céramique (1) ayant une fraction de pores entre 20 à 80 % en volume, où l'outil de ponçage (1) présente une distribution de taille de pores multimodale ayant au moins deux maximas de taille de pores (M1, M2, M3), **caractérisé en ce que** les pores (33) présentent un diamètre moyen entre 50 et 2000 µm et que les maximas de taille de pores (M1, M2, M3) de la distribution de tailles de pores sont séparées d'au moins 100 µm.

2. Un outil de ponçage (1) selon la revendication 1, **caractérisé en ce que** au moins deux des maximas de taille de pores se situent dans la plage entre 100 et 1000 µm.

3. Un outil de ponçage (1) selon la revendication 1 ou 2, **caractérisé en ce que** l'outil de ponçage (1) présente une distribution de taille de pores bimodale avec des pores fins et gros, où les pores fins présentent un maximum de taille de pore entre 100 et 400 µm, et les pores gros présentent un maximum de taille de pore entre 350 et 1000 µm, ou
que l'outil de ponçage présente une distribution de taille des pores trimodale avec des pores fins, des pores moyens et des pores gros, où les pores fins présentent un maximum de taille de pore entre 100 et 300 µm, les pores moyens présentent un maximum de taille de pore entre 250 et 450 µm et les pores gros présentent un maximum de taille de pore entre 400 et 1000 µm.

4. Mélange de porogènes pour la fabrication d'outils de ponçage à pores ouverts et liant céramique (1), où le mélange de porogènes comporte au moins deux polymères différents porogènes, **caractérisé en ce que** les au moins deux polymères différents porogènes présentent des courbes de combustion différentes, où chacune des courbes de combustion présente un maximum, où les maximas des courbes de combustion d'au moins deux des polymères porogènes diffèrent d'au moins 20°C, et où les maximas des courbes de combustion de tous les polymères porogènes se situent en dessous de 750°C.

5. Un mélange de porogènes selon la revendication 4, **caractérisé en ce que** les produits de combustion des polymères porogènes comprennent exclusivement du dioxyde de carbone et de l'eau.

6. Un mélange de porogènes selon une des revendications 4 ou 5, **caractérisé en ce que** les polymères porogènes sont choisis parmi le groupe des thermoplastiques et des duroplastiques.

7. Un mélange de porogènes selon la revendication 6, **caractérisé en ce que** les polymères porogènes sont des thermoplastiques, choisis parmi le groupe consistant de polylactate (PLA), polyacrylate (PMMA), polyéthylène (PE), polypropylène (PP), polycétone (PK), polyvinyle acétate (PVA) et polyvinyle butyral (PVB).

8. Un mélange de porogènes selon une des revendications 4 à 7, **caractérisé en ce que** le mélange de porogènes comporte 20 à 80% en volume de polyéthylène, 10 à 50% en volume de polyacrylate et 10 à 50% en volume de polylactate, polyvinyle acétate ou polyvinyle butyral.

9. Un mélange de porogènes selon une des revendications 4 à 8, **caractérisé en ce que** les polymères porogènes individuels sont présents respectivement en tant que fraction de porogènes dans une plage de taille de grain entre 0,05 et 2 mm, où le mélange de porogènes présente une distribution de taille de grain multimodale.

10. Un mélange de porogènes selon la revendication 9, **caractérisé en ce que** la distribution de taille de grain multimodale comporte au moins deux maximas de taille de grain dans une plage entre 100 et 1000 µm.

11. Un mélange de porogènes selon la revendication 9 ou 10, **caractérisé en ce que** le mélange de porogènes présente une distribution de taille de grain bimodale avec une fraction fine et une fraction grosse, où la fraction fine présente une taille de grain moyenne d50 entre 100 et 400 µm et la fraction grosse présente une taille de grain moyenne d50 entre 350 et 1000 µm, ou
que le mélange de porogènes présente une distribution de taille de grain trimodale avec une fraction fine, une fraction moyenne et une fraction grosse, où la fraction fine présente une taille de grain moyenne d50 entre 100 et 300 µm, la fraction moyenne présente une taille de grain moyenne d50 entre 250 et 450 µm, et la fraction grosse présente une taille de grain moyenne d50 entre 400 et 1000 µm.

12. Un mélange de porogènes selon une des revendications 9 à 11, **caractérisé en ce que** les fractions de porogènes présentent des tailles de grain d50 moyennes différentes, où les tailles de grain moyennes d50 des fractions de porogènes individuelles sont séparées d'au moins 100 µm.

13. Un procédé pour la fabrication d'un outil de ponçage à pores ouverts et liant céramique (1), où un mélange de porogènes comportant au moins deux polymères porogènes est utilisé, **caractérisé en ce que** les au moins deux polymères porogènes différents présentent des courbes de combustion différentes, où chacune des courbes de combustion présente un maximum, où les maximas des courbes de combustion d'au moins deux des polymères porogènes diffèrent d'au moins 20°C et les maximas des courbes de combustion de tous les polymères porogènes du mélange de porogènes se situent en dessous de 750°C.

14. Un procédé selon la revendication 13, **caractérisé en ce que** le mélange de porogènes est ajouté à la masse de pressage en combinaison avec au moins un agent de collage.

15. Un procédé selon la revendication 14, **caractérisé en ce que** l'agent de collage présente une température de combustion qui est supérieure aux maximas des courbes de combustion des polymères porogènes.
